# EUROPÄISCHE PATENTSCHRIFT

(11) **EP 1 001 148 B1**
(45) Veröffentlichungstag und Bekanntmachung des Hinweises auf die Patenterteilung: **17.03.2004**
(21) Anmeldenummer: 99121535.1
(22) Anmeldetag: 29.10.1999
(51) Int. Cl.: F02B 75/02, F02B 11/00, F02B 63/00

(54) **Verfahren zum Betrieb eines im Viertakt arbeitenden Verbrennungsmotors**
Method of operating a four stroke internal combustion engine
Procédé pour l'opération d'un moteur à quatre temps

(30) Priorität: 13.11.1998 DE 19852552
(43) Veröffentlichungstag der Anmeldung: 17.05.2000
(73) Patentinhaber: DaimlerChrysler AG, 70567 Stuttgart (DE)
(72) Erfinder: Nieberding, Rolf-Günther, 77300 Fontainebleau (FR)

(56) Entgegenhaltungen:
- WO-A-98/07973
- DE-A- 2 851 504
- US-A- 4 594 976

## Beschreibung

Die Erfindung betrifft ein Verfahren zum Betrieb eines im Viertakt arbeitenden Verbrennungsmotors, insbesondere nach dem Oberbegriff des Anspruchs 1.

Als Verbrennungsmotor wird eine Maschine verstanden, die in einer Anzahl von veränderlichen Volumina Gemische aus Luft und Kraftstoff verbrennt und die freigesetzte Energie über den in den Volumina entstehenden Gasdruck in mechanische Energie umsetzt. Die Gemische werden innerhalb eines Brennraumes gebildet.

Die Verbrennung wird zumindest im Leerlauf und/oder bei Teillast durch Kompressionszündung eingeleitet. Diese bietet bei mageren Gemischen ein gutes Potential, Luft/Kraftstoff-Gemische bei gutem Wirkungsgrad und geringer Stickoxidbildung zu verbrennen. Diese Verbrennung kann bei motorisch üblichen Verdichtungen nur mit Abgasrückhaltung und Abgasaktivierung betrieben werden. Dabei bedeutet Abgasaktivierung eine Aktivierungseinspritzung von Kraftstoff in heißes, komprimiertes Abgas. Eine solche Verbrennung kann nur in einem schmalen Kennfeldbereich stabil verwirklicht werden. Eine stabile Verbrennung erfordert jedoch insbesondere bei instationärer Betriebsweise eine schnelle Regelung. Dazu sind mechanische Steuerungssysteme wie Klappen oder Ventile zu langsam und für eine zylinderselektive Ausbildung zu aufwendig.

Die Kompressionszündung erfolgt über eine Temperaturerhöhung des Luft/Kraftstoff-Gemisches. Die Temperaturerhöhung des Frischgemischs wird durch Mischen mit den Abgasanteilen des vorhergehenden Zyklus und durch die sich anschließende geometrische Kompression des abgeschlossenen, maximalen Ausgangsvolumens auf ein verbleibendes Restvolumen bewirkt. In dem verbleibenden komprimierten Volumen stellt sich eine Temperatur ein, die das Gemisch zur Entzündung bringt. Der Verbrennungsprozeß, der sich an die Kompressionszündung magerer Gemische anschließt, ist aufgrund der freigesetzten Energie ein selbsterhaltender bzw. selbstverstärkender Prozeß. Die Einleitung und Regelung dieser Verbrennung kann durch variable Verdichtung mittels variierbarem Einlaßschluß oder über variierbare Abgasrückhaltung mit Aktivierungseinspritzung erfolgen. Eine klopffreie Laststeigerung kann über Verdampfungskühlung durch spät eingespritzten Kraftstoff verwirklicht werden.

Die Verbrennung des homogenen Luft/Kraftstoff-Gemischs ist abhängig vom Anteil der Brennraummasse an zurückgehaltenem Abgas mit dem Luftüberschuß aus dem vorangegangenen Zyklus und der zugeführten kalten Frischluft sowie dem direkt in den Brennraum eingebrachten Kraftstoff. Die jeweilige Zusammensetzung des Gemischs beeinflußt den Beginn und damit den Verlauf der Energiefreisetzung. Der hohe Anteil rückgehaltenen Abgases beeinflußt den nachfolgenden Zyklus. Eine Vorsteuerung der Verbrennung ist durch die gezielte Einspritzung im Rahmen der Aktivierung möglich.

Dazu wird Kraftstoff in das im Brennraum rückgehaltene Abgas eingespritzt, wodurch mittels Abgaswärme und heißer Restluft eine vorwiegend endotherme Vorreaktion des zugeführten Kraftstoffs herbeigeführt wird, die die nachfolgend komprimierte, vollständige Ladung bei der Einleitung der exothermen Reaktion beeinflußt.

In der nicht vorveröffentlichten Patentanmeldung 198 18 596.0 ist ein gattungsgemäßer Verbrennungsmotor beschrieben, in dem das für die motorische Realisation der Kompressionszündung angestrebte mechanische Konzept dargestellt ist. Die notwendige Abgasrückhaltung wird durch eine mechanische Vorsteuerung mittels einer binär umschaltbaren Nockenwelle verwirklicht, deren umgeschaltete Nockenform zu verkürzten Ventilsteuerzeiten (Ventilunterschneidung) und damit zur Kompression des rückgehaltenen Abgases führt. Die Menge des Abgases wird über eine Abgasdrosselklappe nach den Auslaßorganen gesteuert. Diese regelt über den Staudruck und die daraus resultierende Druckdifferenz zum Brennraum die darin rückgehaltene Abgasmenge.

Weiterhin sind eine Aktivierungseinspritzung in das rückgehaltene Abgas und eine Funkenzündung homogener, stöchiometrischer Gemische für den Vollastbetrieb vorgesehen.

Die Abgasrückhaltung durch Abgasstau hinter dem Brennraum ist jedoch gasdynamischen Trägheiten unterworfen und kann nicht zylinderselektiv vorgesteuert werden. Eine zyklische Kompensation vorheriger Einflüsse oder eine Vorsteuerung für gezielte schnelle, dynamische Änderungen von Last und Drehzahl ist nachmotorisch nur schwer steuerbar und aufgrund von Totzeiten und Hysteresen regelungsaufwendig.

Eine zylinderselektive Bestückung der einzelnen Abgasstränge mit Einzelklappen ist im Lastbetrieb thermisch problematisch und konstruktiv aufwendig. Außerdem weisen bei einem Mehrzylindermotor die innenliegenden Zylinder einen geringeren Wärmeverlust und damit höhere Gastemperaturen auf, die zu unterschiedlichen Mengen und Dichten des zurückgehaltenen Abgases in den einzelnen Brennräumen führen. Dadurch verläuft die Verbrennung in den innenliegenden Zylindern anders als in den außenliegenden, was den motorischen Gleichlauf und den instationären Betrieb nachhaltig beeinträchtigt.

Der Erfindung liegt die Aufgabe zugrunde, für einen gattungsgemäßen, mehrzylindrigen Verbrennungsmotor ein Verfahren anzugeben, mit dem der Brennraumdruck am Ende der Abgaskompression zylinderselektiv und zykluskonsistent gleichgestellt werden kann.

Die Aufgabe wird durch ein Verfahren mit den Merkmalen des Anspruchs 1 gelöst.

Die Abgasrückhaltung wird in Abhängigkeit von Drehzahl und Last des Verbrennungsmotors durch nur eine Abgasdrosselklappe in der Abgasleitung gesteuert. Für niedrige Lasten und Drehzahlen ist diese maximal geschlossen, so daß der größtmögliche Abgasanteil in den Brennräumen zurückgehalten wird. Bei ansteigender Drehzahl gibt die Abgasdrosselklappe mehr Querschnitt frei und ermöglicht so einen höheren Massendurchsatz. Bei ansteigender Last erhöht sich die Abgastemperatur, so daß zur Reaktionseinleitung weniger Abgasrückhaltung und somit weniger Abgasdrosselung erforderlich sind. Die Abgasdrosselklappe wird demnach zur Vorsteuerung des Betriebspunktes eingesetzt und ist eingeschränkt instationär steuerbar.

Durch geschickte Variation der Aktivierungseinspritzung kann der Druck im Brennraum beim öffnen des Einlaßorgans beeinflußt werden. Die Aktivierungseinspritzung wird je nach Einspritzzeitpunkt in eine frühe und in eine späte Einspritzung unterteilt. Bei der frühen Aktivierungseinspritzung setzt die Reaktionstätigkeit während der Aktivierungsphase Energie frei. Der Brennraumdruck steigt gegenüber einer Abgasrückhaltung ohne Aktivierung an. Dadurch stellt sich beim öffnen der Einlaßorgane ein geringerer Unterdruck gegenüber der Umgebung ein, wodurch die Füllung der Brennräume abnimmt.

Die späte Einspritzung verändert den Druckverlauf während der Abgasexpansion nur aufgrund der Abkühlung durch die Kraftstoffverdampfung, da chemische Reaktionen wegen des raschen Druckabfalls im sich schnell vergrößernden Brennraum verzögert werden. Demgegenüber erhöht die frühe Einspritzung den Druck im Brennraum wegen der Energiefreisetzung im Abgas auch während der Expansionsphase des rückgehaltenen Abgases. Ist dies nicht gewollt, kann das Abgas im Brennraum durch das Verdampfen von zusätzlich später eingespritztem Kraftstoff abgekühlt werden. Die höhere Dichte bzw. der geringere Druck der abgekühlten Masse läßt eine höhere Füllung zu. Daher eignet sich die Aktivierungseinspritzung für eine gezielte Änderung des im Brennraum beim öffnen des Einlaßorgans herrschenden Drucks. Somit kann die Druckdifferenz zum ungedrosselten Umgebungsdruck für das Ansaugen des Frischgases durch Kraftstoffeinspritzung schnell und zykluskonsistent sowie zylinderselektiv beeinflußt werden. Im einzelnen gilt: Je früher Kraftstoff in das rückgehaltene Abgas eingespritzt wird, desto höher ist der Druck im rückgehaltenen Abgas und umso weniger Frischluft kann angesaugt werden. Die maximale Rückhaltung ergibt sich bei einer Einspritzung direkt nach Schließen des Auslaßorgans. Dabei zeigt sich auch die stärkste Auswirkung auf den nächsten Verbrennungszyklus hinsichtlich einer frühen Energiefreisetzung.

Eine Steigerung der angesaugten Frischladung zur Steigerung der gesamten Brennraummasse und zur Maximierung der effektiven Kompression wird durch eine Aktivierungseinspritzung kurz vor dem öffnen des Einlaßorgans erreicht. Das rückgehaltene Abgas wird dadurch gekühlt, wodurch der Brennraumdruck sinkt. Es steigen die angesaugte Frischluftmenge und der Liefergrad. Die Auswirkung einer späten Aktivierungseinspritzung auf den Reaktionseinsatz des nächsten Arbeitszyklusses ist minimal.

Wird ein Teil des Kraftstoffs zu Beginn der Aktivierungsphase nach Schließen des Auslaßorgans in das rückgehaltene Abgas eingespritzt und ein zweiter Teil kurz vor dem öffnen des Einlaßorgans, so nimmt die Verdampfungswärme des zweiten Teils die freigesetzte Energie des ersten Teils weitgehend auf. Dadurch werden der Brennraumdruck gesenkt und die angesaugte Frischluftmenge erhöht. Aufgrund des frühen Aktivierungsbeginns ist in den Brennräumen auch nach der partiellen Abkühlung der Ladung noch genügend aktiviertes Gemisch in Gestalt von reaktionsfreudigen Radikalen vorhanden. So bietet die geteilte Aktivierungseinspritzung bei insgesamt gleicher eingespritzter Kraftstoffmenge die Kombination der Vorteile einer Aktivierung des rückgehaltenen Abgases und dessen Liefergrad erhöhende Druckabsenkung. Beide Wirkungen sind weitgehend entkoppelt.

Mit zunehmender Motorleistung steigen die Gastemperatur und mit ihr die Stickoxidbildung stark an. Zugleich nimmt mit steigender Abgastemperatur die Abgasdichte ab. Durch die Abgasrückhaltung wird die mittlere Abgastemperatur vor Kompressionsbeginn erhöht und dadurch die Zylinderladung reduziert. Mit sinkender Zylinderladung wird bei gleicher Kraftstoffmenge (d. h. gleicher Last) der Luftüberschuß reduziert. Das Gemisch wird im Mittel kraftstoffreicher. Die Reaktionsintensität nimmt zu, die Druckanstiege werden steiler und die Spitzentemperaturen höher. Zur Steigerung der maximalen Last bei gleichzeitiger Vermeidung von Stickoxiden wird eine Reduktion der mittleren Gastemperatur vor Kompressionsbeginn durch Maximierung des Frischluftanteils angestrebt.

Durch eine extrem späte oder geeignet aufgeteilte Aktivierungseinspritzung kann der Abgasbedarf auch bei höherer Last und Drehzahl minimiert werden. Die rückgehaltene Abgasmasse wird abgekühlt. Aufgrund der reaktionskinetischen Aktivierung wird eine geringe Abgasmasse benötigt. Mit kälterer Frischluft steigt der Liefergrad an, sinkt die mittlere Gemischtemperatur und reduziert sich die Stickoxidbildung. Die Kraftstoffmenge der Aktivierung ist ein Teil der gesamten Kraftstoffmenge, die zur Einstellung des optimalen Zeitpunktes der Energiefreisetzung dient.

Die erfindungsgemäße Aktivierungseinspritzung bietet die Möglichkeit, aufgrund ihrer Regelgeschwindigkeit eine zykluskonsistente und zylinderselektive Feineinstellung des Brennraumdruckes vor dem öffnen des Einlaßorgans und damit eine Gleichstellung der einzelnen Brennräume bezüglich Liefergrad und Verbrennung zu erreichen. Diese geschieht ohne mechanischen Stelleingriff in Ventilsteuerzeiten und Stellung der Abgasdrosselklappe.

Die Ventilunterschneidung ist jedoch Voraussetzung für eine Abgasrückhaltung, und mit der Abgasdrosselklappe wird die rückgehaltene Abgasmenge über die Druckdifferenz zu den Brennräumen dem mit der Drehzahl veränderten Zeitquerschnitt angepaßt. Die Abgasdrosselklappe kann jedoch nicht die Unterschiede der Füllung der einzelnen Brennräume ausgleichen. Dies geschieht, wie oben dargelegt, über die Strategie der Aktivierungseinspritzung mit ihrer zylinderselektiven Feineinstellung von Füllung und Reaktivität.

Die Regelung der Verbrennung mit Kompressionszündung magerer Gemische aus Luft, Kraftstoff und rückgehaltenem Abgas ist mit mehreren kaskadisch angeordneten Regelkreisen möglich. Einmal wird das binäre Schalten einer für die Abgasrückhaltung erforderlichen Ventilunterschneidung geregelt. Dies wird durch eine Nockenform bewirkt, die im Vergleich zur Nockenform für Hochlastbetrieb einen wesentlich kleineren öffnungswinkel aufweist.

Der zweite Regelkreis steuert die Abgasdrosselklappe, durch die die Menge des rückgehaltenen Abgases für den Ladungswechsel des gesamten Mehrzylindermotors in Abhängigkeit von dessen Drehzahl und Last bestimmt wird. Bei niedrigen Lasten und Drehzahlen ist die Drosselklappe weitgehend geschlossen, mit steigender Lastendrehzahl wird sie sukzessive geöffnet. Sie wird somit zur Vorsteuerung des Betriebspunktes eingesetzt und ist eingeschränkt auch instationär steuerbar.

Ein dritter Regelkreis betrifft die Aktivierungseinspritzung. Aufgrund der Auswirkung der Aktivierungseinspritzung auf die Abgasrückhaltung kann eine brennraumspezifische Abstimmung elektronisch gesteuert verwirklicht werden. Diese kann über Kennfeld und Motortemperaturen basis-appliziert werden. Durch die Zusammensetzung der Ladung aus rückgehaltenem Abgas mit Restluft, aus Frischluft und Kraftstoff und durch die Energiefreisetzung kann die Verbrennung dynamisch beeinflußt werden. Für den instationär betriebenen Verbrennungsmotor wird bei Last-Steigerung die Ladungsmenge in den Brennräumen maximiert, um den Übergang von der Kompressionszündung magerer Gemische bei Teillast zur Funkenzündung stöchiometrischer, homogener Gemische bei Vollast zu optimieren.

Weitere Merkmale der Erfindung ergeben sich aus den Patentansprüchen und der folgenden Beschreibung. Ausführungsbeispiele der Erfindung sind anhand der nachfolgenden Beschreibung sowie der Zeichnung näher erläutert. Es zeigen:
- Fig. 1: ein Schema eines Verbrennungsmotors mit vier Brennräumen und Abgasrückhaltung,
- Fig. 2: ein Diagramm des Brennraumdrucks während des Gaswechsels.

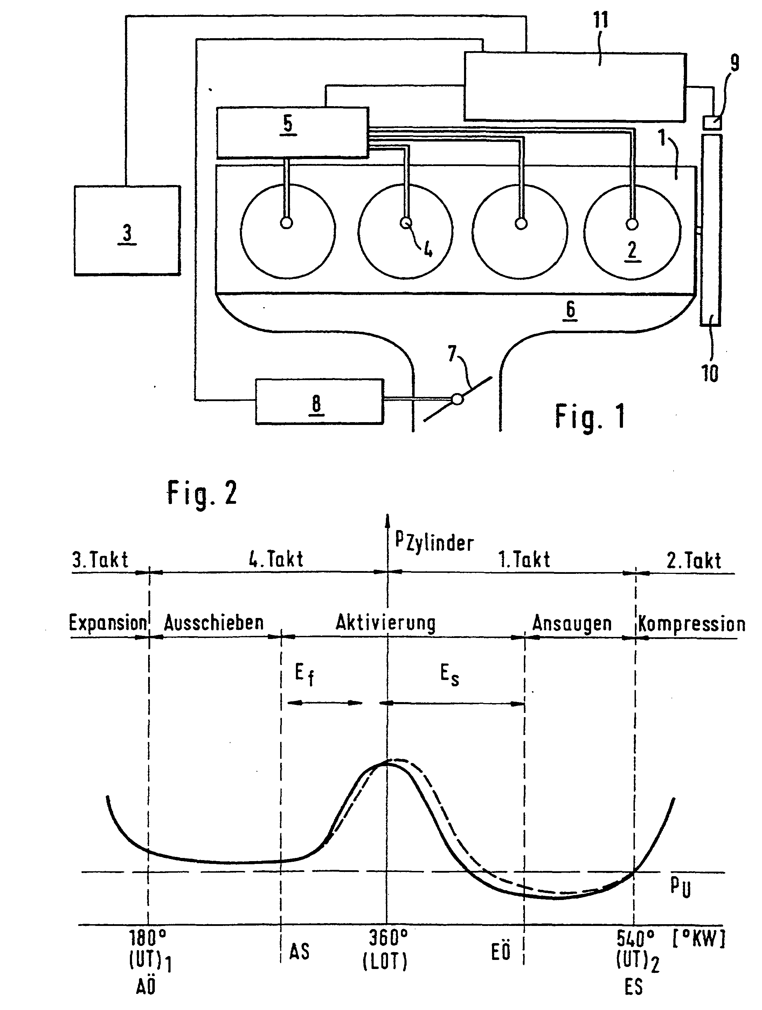

Fig. 1 zeigt einen im Viertakt arbeitenden Verbrennungsmotor mit einem Zylinderblock 1, in dem vier Brennräume 2 angeordnet sind. Der Gaswechsel geschieht durch nicht dargestellte Einlaß- und Auslaßorgane, die durch eine nicht dargestellte Nockenwelle angetrieben werden. Diese ist mittels eines Umschalters 3 zwischen der Nockenform für Ventilüberschneidung (ottomotorischer Betrieb) und der Nockenform für Abgasrückhaltung (Kompressionszündungsbetrieb) umschaltbar.

Der Kraftstoff (im Regelfall Benzin) wird durch Einspritzventile 4, die von einem Einspritzgerät 5 betätigt werden, mit hohem Druck in die Brennräume 2 eingespritzt. Das Abgas wird in einer Abgasleitung 6 gesammelt, in dem eine für alle Brennräume wirksame Abgasdrosselklappe 7 angeordnet ist. Diese wird von einem Klappensteller 8 betätigt.

Ein Drehzahlmesser 9 greift die Drehungleichförmigkeit des Verbrennungsmotors am Umfang eines Schwungrades 10 ab. Ein Rechner 11 steuert unter Auswertung der Drehzahlschwankungen des Schwungrads 10 und von Meßwerten eventuell vorhandener Ionenstromsonden in den Brennräumen 2 das Einspritzgerät 5, den Umschalter 3 und den Klappensteller 8.

Das erfindungsgemäße Verfahren wird anhand von Fig. 2 erläutert:

Die Kurve 11 des Druckverlaufs in den Brennräumen 2 beginnt im dritten Takt mit der Endphase der Expansion nach einer Verbrennung mit Luftüberschuß. Im ersten unteren Totpunkt (UT)₁ bei Kurbelwinkel KW = 180° ist der Öffnungspunkt des Auslaßorgans, mit dem der vierte Takt und das Ausschieben der Abgase beginnen. Die Kurve 11 verläuft während des Ausschiebens oberhalb der Linie p_{U} des Umgebungsdrucks, wobei der Abstand zwischen der Kurve 11 und der Linie p_{U} während des Ausschiebens von der Stellung der Abgasdrosselklappe 7 und der Motordrehzahl abhängt.

Beim Schließpunkt AS des Auslaßorgans endet die Ausschiebephase, und es beginnt die Aktivierungsphase. Diese endet mit dem Öffnungspunkt EÖ des Einlaßorgans. Zwischen Schließpunkt AS und öffnungspunkt EÖ findet die Kompression und Aktivierung des rückgehaltenen Abgases statt. Die Aktivierung besteht in einer Aktivierungseinspritzung von Kraftstoff in das Abgas. Diese kann entweder nur im Anfangsbereich E_{f} oder nur im Endbereich Eₛ oder in beiden Bereichen des Kompressionsvorganges stattfinden. Die durchgezogene Kurve 11 stellt den Fall der nur späten Aktivierungseinspritzung dar, während deren gestrichelter Teil den Verlauf bei einer frühen Aktivierungseinspritzung zeigt. Die frühe Aktivierungseinspritzung bewirkt aufgrund der Abkühlung des rückgehaltenen Abgases eine Absenkung des Kompressionsdrucks, die nach Einsetzen der exothermen Reaktion im Bereich des Ladungswechseltotpunktes LOT zu einer Drucksteigerung gegenüber dem Kompressionsdruck führt. Eine zusätzliche späte Aktivierungseinspritzung führte durch die Verdampfungswärme des Kraftstoffs zu einer Druckangleichung während der Expansion an die reine Kompressionskurve im Bereich des öffnungspunktes EÖ des Einlaßorgans. Beide Kurven liegen im öffnungspunkt Eö unterhalb der Linie p_{U} des Umgebungsdrucks, wodurch ein Einströmen des rückgehaltenen Abgases in den Einlaßbereich vermieden wird. Die Höhe des Unterdrucks im öffnungspunkt EÖ bestimmt den Liefergrad des Verbrennungsmotors. Bei früher Aktivierungseinspritzung ist der Unterdruck am öffnungspunkt Eö am geringsten und die Temperatur sowie die kinetische Aktivität des rückgehaltenen Abgases am höchsten. Das bedeutet höchste Aktivierungsenergie und zugleich geringsten Liefergrad, ein Zustand, der für den niedrigen Leerlauf optimal ist.

Eine zusätzliche späte Aktivierungseinspritzung senkt den Brennraumdruck am öffnungspunkt EÖ ab, wodurch der Liefergrad steigt. Zugleich vermindert sich der thermische Anteil der Aktivierungsenergie, während deren reaktiver, chemischer Anteil (Radikalbildung) erhalten bleibt. Dieser Zustand eignet sich besonders für den höheren Teillastbereich.

Nach dem öffnungspunkt EÖ des Einlaßorgans beginnt die Ansaugphase, die bis zu dessen Schließpunkt ES im zweiten unteren Totpunkt (UT)₂ bei einem Kurbelwinkel von 540° KW reicht und dort in die Kompressionsphase übergeht. Dabei geschieht die Reaktionseinleitung durch homogene, thermische oder chemische Energiezufuhr.

Bei extrem später Aktivierungseinspritzung wird ein hoher Liefergrad mit geringer Aktivierungsenergie erreicht, ein Zustand, wie er für den Übergang zur Funkenzündung erwünscht ist.

Bei Vollast wird die Nockenwelle auf Ventilüberschneidung geschaltet, die Abgasdrosselklappe vollständig geöffnet und der Kraftstoff in die Ansaugphase eingespritzt. Dadurch wird ein maximaler Liefergrad erreicht. Anstelle der Aktivierung tritt jetzt die Funkenzündung.

Die Abgasdrosselklappe, die schaltbare Nockenwelle, die Aktivierungseinspritzung und die ottomotorische Einspritzung werden durch kaskadisch angeordnete Regelkreise gesteuert. Während die Abgasdrosselklappe einen für alle Brennräume gleichen und nur bedingt instationären Abgasstau bewirkt, gestattet die erfindungsgemäße Ausbildung der Aktivierungseinspritzung eine zylinderselektive und zykluskonsistente Regelung des Liefergrads und der Aktivierungsenergie jedes einzelnen Brennraums und damit einen gleichmäßigen Lauf des Verbrennungsmotors.

## Patentansprüche

1. Verfahren zum Betrieb eines im Viertakt arbeitenden Verbrennungsmotors mit folgenden Merkmalen:
- in mindestens einen Brennraum (2), dessen Volumen sich zyklisch ändert, wird Kraftstoff direkt eingespritzt,
- Frischgas wird durch mindestens ein Einlaßorgan und Verbrennungsabgas durch mindestens ein Auslaßorgan zu- bzw. abgeführt,
- bei Teillast wird ein mageres Grundgemisch aus Luft, Kraftstoff und rückgehaltenem Abgas gebildet und ein stöchiometrisches Gemisch bei Vollast,
- bei Teillast erfolgt eine Kompressionszündung und bei Vollast eine Funkenzündung,
- und mit mechanisch gesteuerter Abgasrückhaltung mit schaltbarer Ventilunterschneidung und Abgasdrosselung,
- sowie mit einer Aktivierungseinspritzung in das rückgehaltene Abgas,
**dadurch gekennzeichnet, daß**
- die Menge des rückgehaltenen Abgases bei eingeschalteter Ventilunterschneidung abhängig von Motordrehzahl und -last durch eine für alle Brennräume (2) wirksame Abgasdrosselklappe (7) gesteuert bzw. voreingestellt wird
- und der Druck beim öffnen der Einlaßorgane in den einzelnen Brennräumen (2) durch entsprechende zylinderselektive und zykluskonsistente Aktivierungseinspritzung gleichgestellt wird.

2. Verfahren nach Anspruch 1,
**dadurch gekennzeichnet, daß** die zylinderselektive Aktivierungseinspritzung bezüglich Einspritzmenge, Einspritzzeitpunkt und Einspritzhäufigkeit variierbar ist.

3. Verfahren nach Anspruch 2,
**dadurch gekennzeichnet, daß** die zylinderselektive Aktivierungseinspritzung im Bereich des Endes und/oder des Anfangs der Kompression des rückgehaltenen Abgases erfolgt.

4. Verfahren nach Anspruch 3,
**dadurch gekennzeichnet, daß** bei höherer Last und insbesondere beim Übergang von Kompressionszündung zu Fremdzündung der Liefergrad durch geringe Abgasdrosselung und späte Aktivierungseinspritzung maximiert wird.

5. Verfahren nach einem der Ansprüche 1 bis 4,
**dadurch gekennzeichnet, daß** zumindest die Aktivierungseinspritzung, die Schaltnockenwelle und die Abgasdrosselklappe (7) von einem elektronischen Steuergerät (11) in Verbindung mit Kennfeldern der Motordaten unter Berücksichtigung von Motortemperaturen und den Drehzahlschwankungen des Verbrennungsmotors gesteuert werden.

6. Verfahren nach Anspruch 5,
**dadurch gekennzeichnet, daß** die Regelung der Stellung der Nockenwelle und der Abgasdrosselklappe (7) sowie für die Aktivierungseinspritzung und den ottomotorischen Betrieb durch mehrere, kaskadisch wirksame Regelkreise erfolgt.

## Claims

1. Method of operating a four-stroke internal combustion engine having the following characterising features:
- fuel is directly injected into at least one combustion chamber (2), the volume of which varies in cycles,
- fresh gas is induced by means of at least one inlet element and combustion exhaust gas ejected via at least one outlet element,
- a lean basic mixture of air, fuel and retained exhaust gas is formed at part-load and a stoichiometric mixture at full load.
- a compression ignition takes place at part-load and spark ignition at full load,
- and exhaust gas retention is mechanically controlled by means of switchable valve undercutting and exhaust gas throttling,
- and with an activation injection into the retained exhaust gas,
**characterised in that**
- when switched to valve undercutting, the quantity of exhaust gas retained, depending on engine speed and load, is controlled or pre-set by means of an exhaust gas throttle valve (7) acting on all combustion chambers
- and the pressure in the individual combustion chambers (2) is equalised by appropriate activation injection on a cylinder-selective basis and consistent with the cycle as the inlet elements are opened.

2. Method as claimed in claim 1,
**characterised in that** the cylinder-selective activation injection is variable in terms of injection quantity, injection timing and injection frequency.

3. Method as claimed in claim 2,
**characterised in that** the cylinder-selective activation injection takes place in the range of the end and/or the start of compression of the retained exhaust gas.

4. Method as claimed in claim 3,
**characterised in that** at higher load and in particular when switching from compression ignition to spark ignition, the rate of discharge is maximised by low exhaust gas throttling and late activation injection.

5. Method as claimed in one of claims 1 to 4,
**characterised in that** at least the activation injection, switching camshaft and exhaust gas throttle valve (7) are controlled by an electronic control system (11) in conjunction with characteristic maps of engine data, taking account of engine temperatures and speed fluctuations of the internal combustion engine.

6. Method as claimed in claim 5,
**characterised in that** the position of the camshaft and the exhaust gas throttle valve (7) for both activation injection and spark ignition engine operation is controlled by several control circuits acting in a cascaded arrangement.

## Revendications

1. Procédé pour faire fonctionner un moteur à combustion interne à quatre temps, présentant les particularités suivantes :
- du carburant est injecté directement dans au moins une chambre de combustion (2) dont le volume varie de manière cyclique,
- du gaz frais est amené par l'intermédiaire d'au moins un organe d'admission, et du gaz d'échappement de combustion est évacué par au moins un organe d'échappement,
- à charge partielle, est formé un mélange de base pauvre, constitué d'air, de carburant et de gaz d'échappement retenu, et à pleine charge est formé un mélange stoechiométrique,
- à charge partielle se produit un allumage par compression, et à pleine charge un allumage par étincelle,
- et le procédé présentant également une retenue de gaz d'échappement commandée mécaniquement avec une rétention des soupapes commutable et un freinage de retenue du gaz d'échappement par étranglement,
- ainsi qu'une injection d'activation dans le gaz d'échappement retenu,
**caractérisé en ce que**
- la quantité du gaz d'échappement retenu, lorsque la rétention des soupapes est enclenchée, est commandée ou préréglée en fonction de la vitesse de rotation du moteur et de la charge du moteur, par un clapet d'étranglement de gaz d'échappement (7) actif pour toutes les chambres de combustion (2),
- et la pression, lors de l'ouverture des organes d'admission, est égalisée dans les différentes chambres de combustion individuelles (2), par une injection d'activation correspondante, sélective par cylindre et stable sur le cycle.

2. Procédé selon la revendication 1, **caractérisé en ce qu'**il est possible de faire varier l'injection d'activation sélective par cylindre, quant à la quantité injectée, à l'instant d'injection et à la fréquence d'injection.

3. Procédé selon la revendication 2, **caractérisé en ce que** l'injection d'activation sélective par cylindre est effectuée dans le domaine de la fin et/ou du début de la compression du gaz d'échappement retenu.

4. Procédé selon la revendication 3, **caractérisé en ce qu'**en cas de charge plus élevée et notamment lors du passage de l'allumage par compression à l'allumage par influence externe, le coefficient de rendement est maximisé par une faible retenue par étranglement du gaz d'échappement et une injection d'activation tardive.

5. Procédé selon l'une des revendications 1 à 4, **caractérisé en ce qu'**au moins l'injection d'activation, l'arbre à cames de commande et le volet d'étranglement de gaz d'échappement (7) sont commandés par un appareil de commande électronique (11), en combinaison avec des diagrammes caractéristiques des données moteur en tenant compte de températures du moteur et des variations de vitesses de rotation du moteur à combustion interne.

6. Procédé selon la revendication 5, **caractérisé en ce que** la régulation de la position de l'arbre à cames et du volet d'étranglement de gaz d'échappement (7), ainsi que pour l'injection d'activation et le fonctionnement en moteur à allumage par étincelle ou source d'allumage externe, est effectuée par plusieurs boucles de régulation agissant en cascade.
